**Europäisches Patentamt**

**European Patent Office**

**Office européen des brevets**

(11) Veröffentlichungsnummer: **0 123 987**
**A2**

## (12) EUROPÄISCHE PATENTANMELDUNG

(21) Anmeldenummer: **84104153.6**

(51) Int. Cl.³: **G 02 C 5/22**

(22) Anmeldetag: **12.04.84**

(30) Priorität: **20.04.83 CH 2133/83**

(43) Veröffentlichungstag der Anmeldung: **07.11.84**
**Patentblatt 84/45**

(84) Benannte Vertragsstaaten: **AT DE FR IT**

(71) Anmelder: **Reinhard, Peter, Weingartenstrasse 8, CH-8957 Spreitenbach (DE)**

(72) Erfinder: **Reinhard, Peter, Weingartenstrasse 8, CH-8957 Spreitenbach (DE)**

(74) Vertreter: **Meyer, Reinhard, Dipl.-Ing., c/o Dr. A. R. Egli & Co. Patentanwälte Horneggstrasse 4, CH-8008 Zürich (CH)**

(54) **Scharnierteil für ein Brillengestell.**

(57) Ein solcher in der Brillenfassung (1) verankerter Scharnierteil (4) bildet zusammen mit einem im Brillenbügel (2) verankerten Scharnierteil (5) ein Brillenscharnier. Der fassungsseitige Scharnierteil (4) ist aus zwei Metallplatten (6, 7) mit einer Stegpartie und einer Einschnürungsnut (11) geformt. Die Stegpartien werden aufeinandergelegt und bilden einen Steg (8), der zwischen Augenstegen (9) mit einer Bohrung (14) für die Lagerung einer Gelenkschraube (20) und Befestigungsstegen (10) liegt. Da die Stege (9, 10) aus hochfestem Stahlblech hergestellt werden können, kann der Scharnierteil kleiner als bekannte Scharnierteile, jedoch unter Einhaltung mindestens derselben Festigkeit, ausgebildet werden. Der Steg (8) mit den Einschnürungsnuten (11) bildet zudem eine Stelle, durch die die Inklinierfähigkeit erhöht wird.

## Scharnierteil für ein Brillengestell

Die Erfindung betrifft ein Scharnierteil eines Gelenkes
mit einer Augenpartie zum gelenkigen Verbinden des Bügels
und der Brillenfassung eines Brillengestells, welcher
Scharnierteil eine an die Augenpartie anschliessende
Befestigungspartie aufweist, welch letztere mit der Brillenfassung verbindbar ist, und ein Brillengestell mit diesem
Scharnierteil.

Brillengestelle weisen, unabhängig davon, ob sie aus Metall
oder aus Kunststoff hergestellt sind, eine Brillenfassung
auf, an der zwei Brillenbügel angelenkt und mittels
eines Drehgelenkes miteinander verbunden sind. Dieses Drehgelenk, oft als Brillenscharnier bezeichnet, erlaubt das
Zusammenklappen der Bügel bei Nichtgebrauch der Brille.

Brillenscharniere sind in vielen Ausführungen bekannt.
Zunächst unterscheiden sie sich, je nachdem, ob sie für
Brillengestelle aus Metall oder Kunststoff verwendet werden.
Aber auch innerhalb einer dieser Gestellgattungen sind
viele Ausführungsformen des Brillenscharniers bekannt. Bei
Brillengestellen aus Kunststoff weist der fassungsseitige
Scharnierteil, der auch als Mittelteilscharnier bezeichnet
wird, eine Befestigungs- oder Verankerungspartie auf, die
fest in der Fassung verankert wird. Hierzu sind verschiedene
Verfahren bekannt; entweder wird die Verankerungspartie in
eine Vertiefung der Fassung eingeklebt oder unter örtlicher Erweichung des Kunststoffes an der Fassung eingesetzt. Auch ist es möglich, diesen Scharnierteil mit dem Spritzen des Brillengestells anzubringen. Eine dieser Ausführungen zeigt beispielsweise die DE-AS 23 56 818.

Bei Brillengestellen aus Metall wird der fassungsseitige Scharnierteil auch als Mittelteilscharnier oder Metallbacke bezeichnet und ist an einem an dem Fassungsrand angeordneten Schliessblock befestigt, beispielsweise durch Schweissen, Löten o.dgl., siehe z.B. DE-AS 22 38 730.

Das fassungsseitige Scharnier weist eine Augenpartie mit einem oder zwei Scharnieraugen auf, das bzw. die mit der Augenpartie eines mit dem Brillenbügel verbundenen Bügelscharnierteils mittels einer Gelenkschraube verbunden ist bzw. sind. Die Ausbildung des Bügelscharnierteils ist im Zusammenhang mit der Erfindung ohne Bedeutung ; die Erfindung beschränkt sich auf die Ausbildung des fassungsseitigen Scharnierteils, das sich zur Verwendung sowohl für Brillenfassungen aus Kunststoff, z.B. zum Einschwemmen, Eindrücken, Eingiessen oder Einspritzen, als auch für Brillenfassungen aus Metall, z.B. zum Anlöten als Backe, eignet.

Im Hinblick auf die Tendenz nach feineren und leichteren Brillenfassungen steigt die Nachfrage nach feineren und leichteren Brillenscharnieren. Zudem besteht eine verstärkte Notwendigkeit, die Scharniere inklinieren zu können, d.h. den Scharnierteilen, insbesondere dem fassungsseitigen Scharnierteil, eine Neigung erteilen zu können, um dadurch die Neigung der Brillengläser zum Auge zu beeinflussen. Andererseits soll jedoch das Brillenscharnier durch diese Minimalisierung nicht geschwächt werden, und insbesondere soll die Verankerung bzw. die Befestigung des Scharnierteils an der Brillenfassung mindestens gleich stabil oder noch stärker sein als bei den bekannten Ausführungen.

Hier setzt die Erfindung ein, der die Aufgabe zugrundeliegt, einen Scharnierteil der eingangs beschriebenen Art so auszugestalten, dass er trotz der kleineren Dimensionen höhere Festigkeit, insbesondere bei der Befestigung an der Fassung, aufweist und in einfacher Weise eine höhere Inklinierfähigkeit erzielt.

Diese Aufgabe wird gemäss der Erfindung dadurch gelöst, dass der Scharnierteil ein Körper ist, bei dem sowohl die Augenpartie mindestens zwei Augenstege als auch die Befestigungspartie mindestens zwei Befestigungsstege aufweist.

Die Erfindung umfasst auch ein Brillengestell aus Metall mit dem erfindungsgemässen Scharnierteil, wobei die Befestigungsstege dieses Teils mit der Brillenfassung verbunden sind, derart, dass die Befestigungsstege beidseits der in der Brillenfassung liegenden Fuge befestigt und durch die Spannschraube zwecks Verkleinern der Fuge zusammenziehbar sind.

Die Erfindung ist in der Zeichnung in zwei Ausführungsformen dargestellt und nachfolgend beschrieben. Es zeigen:

Fig. 1    eine schematisch dargestellte Draufsicht eines Brillenscharniers für ein Brillengestell aus Kunststoff in stark vergrössertem Massstab,

Fig. 2    eine Seitenansicht des Brillenscharniers nach Fig. 1 aus Richtung II in Fig. 1,

Fig. 3    einen fassungsseitigen Scharnierteil in stark vergrössertem
          Massstab für eine Brillenfassung aus Metall und

Fig. 4    eine Anordnung des Scharnierteils nach Fig. 3
          beidseits der Fuge einer Brillenfassung aus
          Metall.

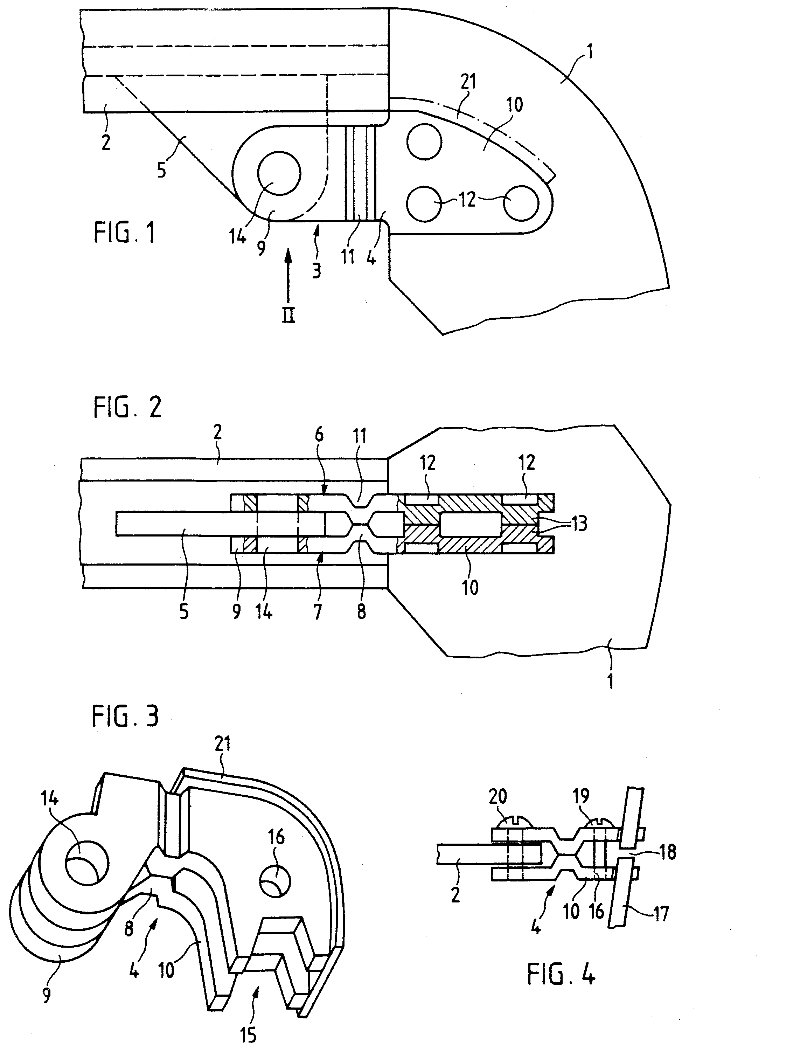

In Fig. 1 und 2 ist mit 1 die Brillenfassung und mit 2 der
Bügel eines Brillengestells aus Kunststoff bezeichnet. Die
Brillenfassung 1 und der Bügel 2 sind mit einem Brillenscharnier 3 gelenkig miteinander verbunden, das sich aus
einem fassungsseitigen Scharnierteil 4 und einem bügelseitigen Scharnierteil 5 zusammensetzt. Der bügelseitige
Scharnierteil 5 ist in nicht näher beschriebener Weise in
dem Bügel 2 verankert.

Der fassungsseitige Scharnierteil 4 ist, siehe Fig. 2, aus
zwei dünnen Metallplatten 6, 7 zusammengesetzt, die in einem
Steg 8 miteinander verbunden sind und damit einen Körper
bilden, der bügelseitig zwei Augenstege 9 und fassungsseitig zwei Befestigungsstege 10 aufweist.

Auf der Aussenseite des Steges 8 sind Einschnürungen in
Form von Nuten 11 angeordnet. Die Befestigungsstege 10
weisen auf der Aussenseite als Vertiefung ausgebildete
Sicken 12 auf, wobei der auf die Innenseite der Stege 10
herausgedrückte Materialteil 13 zusammen mit dem gegenüberliegenden Materialteil 13 und mit den eingeschnürten
Partien des Steges 8 den Abstand sowohl der Augenstege 9
als auch der Befestigungsstege 10 definiert. Die Augenstege 9 (und der Scharnierteil 5) weisen eine Bohrung 14
zur Aufnahme einer Gelenkschraube (nicht dargestellt) auf.

Die beiden Platten 6, 7 können in einer Stanz- und Pressoperation hergestellt werden, während die Verbindung der Stegteile und der Materialteile 13 geschweisst, z.B. durch Laser, wird. Diese Art der Herstellung ermöglicht die Verwendung von hochfestem, z.B. rostfreiem oder hochnickelhaltigem, Stahlblech. Damit kann der Scharnierteil 4 feiner und leichter ausgebildet werden, ohne dabei an Festigkeit gegenüber bekannten Ausführungen einzubüssen, und es kann sogar die Festigkeit erhöht werden.

In Fig. 3 ist ein fassungsseitiger Scharnierteil 4 für die Befestigung an einer Brillenfassung aus Metall dargestellt. Gleiche Teile weisen dieselben Bezugszahlen wie in Fig. 1 und 2 auf. Auch dieser Scharnierteil wird aus zwei Stahlblechen desselben Materials wie in Fig. 1 und 2 hergestellt, wobei jedoch auf die Sicken in den Befestigungsstegen 10 verzichtet wird. Die Befestigungsstege 10 weisen an ihrem Ende je eine Ausnehmung 15 und in unmittelbarer Nähe dieser Ausnehmung eine Bohrung 16 auf, deren Funktion anhand von Fig. 4 beschrieben wird.

In Fig. 4 ist mit 17 ein Teil einer Brillenfassung an derjenigen Stelle dargestellt, an der sie eine Fuge 18 aufweist, die zum Einführen des Brillenglases in die Fassung erforderlich ist. Beidseits der Fuge 18 ist je ein Befestigungssteg 10 des Scharnierteils 4 mit der Brillenfassung 17 verbunden, z.B. durch Löten. Die Bohrung 16 dient der Aufnahme einer Spannschraube 19. Die Verbindung des Scharnierteils 4 mit dem Bügel 2 erfolgt in gleicher Weise wie bei der Ausführung nach Fig. 1 und 2, d.h. mittels einer Gelenkschraube 20. Durch diese Anordnung wird erreicht, dass auf die üblicherweise verwendeten Schliessblöcke verzichtet werden kann. Das Schliessen der Fuge 18 nach Einsetzen des Brillenglases wird von der Spannschraube 19 übernommen, mit der durch die Befestigungsstege 10 die Partien 17 der Brillenfassung zusammengezogen werden.

In Fig. 1 und 3 ist eine Zierplatte 21 dargestellt, die sich über die Befestigungsstege 10 erstreckt; sie kann beispielsweise in einer Kontrastfarbe gehalten sein und wird in geeigneter Weise, z.B. durch Aufstecken oder Kleben, an den Befestigungsstegen 10 befestigt.

Der beschriebene Scharnierteil 4 ist aus zwei dünnen Platten zusammengesetzt. Es wäre auch möglich, den Scharnierteil 4 aus einem einzigen Stück herzustellen. Die Herstellung des Scharnierteils aus zwei Stahlblechen ist einfach und wirtschaftlich. Dadurch, dass in den Befestigungsstegen Sicken 12 vorgesehen sind, wird eine einwandfreie Verankerung im Kunststoff erreicht, da derselbe sowohl in die Sicken 12 als auch zwischen die Befestigungsstege 10 fliesst und beim Erstarren eine formschlüssige Verbindung bildet.

Es ist denkbar, dass anstelle von Metall auch ein hochfester Kunststoff für die Herstellung des Scharnierteils 4 verwendet werden kann. Der Steg mit den Einschnürungsnuten 11 dient auch dazu, die Inklinierfähigkeit des Scharnierteils 4 zu erhöhen, d.h. an dieser Stelle kann der Scharnierteil abgedreht werden, um dem Bügel 2 die gewünschte Lage zu den Brillengläsern zu geben. Zur weiteren Erhöhung der Inklinierfähigkeit kann zudem an dieser Stelle die Materialstärke verringert werden.

Patentansprüche

1. Scharnierteil eines Gelenkes mit einer Augenpartie zum gelenkigen Verbinden des Bügels (2) und der Brillenfassung (1) eines Brillengestells, welcher Scharnierteil (4) eine an die Augenpartie anschliessende Befestigungspartie aufweist, welch letztere mit der Brillenfassung verbindbar ist, dadurch gekennzeichnet, dass der Scharnierteil (4) ein Körper ist, bei dem sowohl die Augenpartie mindestens zwei Augenstege (9) als auch die Befestigungspartie mindestens zwei Befestigungsstege (10) aufweist.

2. Scharnierteil nach Anspruch 1, dadurch gekennzeichnet, dass der Körper zwischen der Augen- und der Befestigungspartie einen die Augenstege (9) mit den Befestigungsstegen (10) verbindenden Steg (8) aufweist.

3. Scharnierteil nach Anspruch 2, dadurch gekennzeichnet, dass der Steg (8) im Bereich von zwei gegenüberliegenden Einschnürungsnuten (11) liegt.

4. Scharnierteil nach Anspruch 1, dadurch gekennzeichnet, dass der Körper sich aus zwei Platten (6, 7) zusammensetzt, an denen je eine Hälfte des Steges (8) unter Bildung der Einschnürungsnut (11) angeformt ist, wobei die Steghälften miteinander, z.B. durch Schweissen, Löten o.dgl., verbunden sind.

5. Scharnierteil nach Anspruch 1, dadurch gekennzeichnet, dass die Befestigungsstege (10) aussenseitig Vertiefungen (12) aufweisen.

6. Scharnierteil nach Anspruch 1 oder 5, dadurch gekennzeichnet, dass die Befestigungsstege (10) innenseitig Vorsprünge (13) aufweisen, die den Abstand der Befestigungsstege definieren.

7. Scharnierteil nach Anspruch 1, dadurch gekennzeichnet, dass in den Befestigungsstegen (10) eine Bohrung (16) für eine Spannschraube (19) zum Zusammenziehen der Befestigungsstege angeordnet ist.

8. Scharnierteil nach Anspruch 1 oder 7, dadurch gekennzeichnet, dass die Befestigungsstege (10) an ihren Enden Ausnehmungen (15) aufweisen.

9. Brillengestell aus Metall mit einem Scharnierteil nach einem der Ansprüche 1 - 8, wobei die Befestigungsstege (10) des Scharnierteils (4) mit der Brillenfassung (17) verbunden sind, dadurch gekennzeichnet, dass die Befestigungsstege (10) beidseits der in der Brillenfassung (17) liegenden Fuge (18) befestigt und durch die Spannschraube (19) zwecks Verkleinern der Fuge zusammenziehbar sind.

FIG. 1

FIG. 2

FIG. 3

FIG. 4